# EUROPÄISCHE PATENTSCHRIFT

(11) **EP 1 954 965 B1**
(45) Veröffentlichungstag und Bekanntmachung des Hinweises auf die Patenterteilung: **05.08.2009**
(21) Anmeldenummer: 06829174.9
(22) Anmeldetag: 29.11.2006
(51) Int. Cl.: F16H 57/04

(54) **DOPPELKUPPLUNGSGETRIEBE EINES KRAFTFAHRZEUGES**
DUAL CLUTCH TRANSMISSION OF A MOTOR VEHICLE
UNE TRANSMISSION A EMBRAYAGE DOUBLE D'UN VEHICULE

(30) Priorität: 01.12.2005 DE 102005057294
(43) Veröffentlichungstag der Anmeldung: 13.08.2008
(73) Patentinhaber: ZF Friedrichshafen AG, 88038 Friedrichshafen (DE); Dr.Ing. H.C. F. Porsche Aktiengesellschaft, 70435 Stuttgart (DE)
(72) Erfinder: PATZNER, Jens, 14478 Potsdam (DE); KRAXNER, Dieter, 75449 Wurmberg (DE); RETTENMAIER, Markus, 70195 Stuttgart (DE); HÖBEL, Peter, 75242 Neuhausen (DE)
(86) Internationale Anmeldenummer: PCT/EP2006/011436
(87) Internationale Veröffentlichungsnummer: WO 2007/062814

(56) Entgegenhaltungen:
- EP-A2- 1 467 130
- DE-A1-1102004 055 12
- GB-A- 2 021 712
- US-A- 2 899 034
- CROSSES J: "GEARING UP" April 2003 (2003-04), AUTOMOTIVE ENGINEER, PROFESSIONAL ENGINEERING PUBLISHING, LONDON, GB, PAGE(S) 66,69-70 , XP001159253 ISSN: 0307-6490 Abbildungen

## Beschreibung

Die Erfindung betrifft ein Doppelkupplungsgetriebe eines Kraftfahrzeuges gemäß dem Oberbegriff des Patentanspruchs 1. Aus der US 2 899 034 ist ein Doppelkupplungsgetriebe mit den Merkmalen des Obergbegriffes des Anspruchs 1 bekannt.

Doppelkupplungsgetriebe für Kraftfahrzeuge sind bereits bekannt. Ihr wesentlicher Vorteil gegenüber herkömmlichen Stufenwechselgetrieben besteht darin, dass die Schaltvorgänge beim Gangwechsel nahezu ohne Zugkraftunterbrechung erfolgen. Dadurch werden häufige Beschleunigungs- und Lastwechsel beim Wechseln der Gänge vermieden, was zu einem komfortableren Fahrverhalten führt und eine sportlichere Fahrweise ermöglicht. Bei einer, beispielsweise in der DE 101 34 118 A1 beschriebenen, gängigen Bauweise verfügt das Doppelkupplungsgetriebe über zwei koaxial zueinander angeordnete Antriebswellen (Getriebeeingangswellen), denen jeweils eingangsseitig eine Reibungskupplung und getriebeseitig ein Getrieberadsatz einer Gruppe von Gängen, vorzugsweise gerade Gänge einerseits sowie ungerade Gänge und Rückwärtsgang andererseits, zugeordnet sind. Dabei ist die eine Antriebswelle als eine äußere Hohlwelle ausgebildet, in der die andere Antriebswelle als eine innere Zentralwelle gelagert ist, wobei die innere Welle in einem Übergangsbereich innerhalb eines Getrieberaumes aus der äußeren Welle austritt. Die Kraftübertragung erfolgt wechselweise über jeweils eine der Antriebswellen.

Ein Gangwechsel erfolgt durch ein überlagertes Öffnen und Schließen der beiden Kupplungen, wobei jeweils zwei Gänge sequenziell auf den Antriebswellen eingelegt sind. Derartige Getriebe werden meist als automatisierte Getriebe ausgeführt, d.h. die angewählten Gangwechsel werden über hydraulische/elektrische Stellantriebe gesteuert. Als Reibungskupplungen kommen in der Regel nasse Lamellenkupplungen zum Einsatz, die in einem Kupplungsraum benachbart zu einem Getrieberaum, der den Getrieberadsatz des Doppelkupplungsgetriebes aufnimmt, angeordnet sind.

Der Kupplungsraum und der Getrieberaum können innerhalb des Getriebegehäuses einen gemeinsamen Ölraum bilden. Dagegen bietet eine Ölräumetrennung, wie sie beispielsweise in der DE 35 30 017 A1 und der DE 41 15 989 A1 beschrieben ist, den Vorteil, für die Doppelkupplung und das Getriebe jeweils ein speziell auf deren Anforderungen abgestimmtes Öl nutzen zu können. In diesem Fall müssen die beiden Ölräume gegeneinander abgedichtet werden, damit sich die Öle nicht vermischen. Grundsätzlich ist es bei Getrieben zur Abdichtung von Ölräumen bekannt, Wellendurchführungen mit Radialwellendichtringen abzudichten. Derartige Dichtringe weisen im Allegemeinen ein U-förmiges Profil auf, an deren einem Schenkel eine Dichtlippe ausgebildet ist, die an der entsprechenden Welle anliegt. Bei Doppelkupplungsgetrieben besteht jedoch das Problem, dass die Ölräume auch direkt im Austrittsbereich der radial inneren Antriebswelle aus der radial äußeren Antriebswelle innerhalb des Getriebegehäuses gegeneinander abgedichtet werden müssen, da beide Ölräume über einen Ringspalts zwischen den Wellen in Verbindung stehen.

Aus der nicht vorveröffentlichten DE 10 2004 046 297 A1 ist eine Anordnung zur Abdichtung koaxialer Antriebswellen bekannt, bei der im Austrittsbereich der inneren Zentralwelle aus der äußeren Hohlwelle ein vergrößerter Ringspalt vorgesehen ist. In dem Ringspalt ist stirnseitig ein Doppeldichtring, bestehend aus zwei Radialwellendichtringen angeordnet. Der Doppeldichtring sitzt in der hohlen äußeren Antriebswelle und dichtet mit den Dichtlippen der beiden Radialwellendichtringe auf der inneren Antriebswelle. Zwischen den beiden Radialwellendichtringen ist ein Zwischenraum vorgesehen, der mit einer Drainage zur Entlüftung und zur Leckagekontrolle verbunden ist. Durch die bekannte Anordnung wird eine konstruktiv einfache Abdichtung der beiden Wellen zur Verfügung gestellt.

Nachteilig daran ist, dass die Radialwellendichtringe bei einer Rotation der äußeren Hohlwelle drehzahlbeaufschlagt werden. Dies kann aufgrund von Fliehkräften zu einem Abheben der Dichtlippen von der zentralen Antriebswelle führen, welches die Dichtheit der Anordnung beeinträchtigt. Zudem ist die Drainage zur Entlüftung und Belüftung sowie zur Leckageerkennung konstruktiv relativ aufwendig.

Vor diesem Hintergrund liegt der Erfindung die Aufgabe zugrunde, eine Dichtungsvorrichtung der eingangs genannten Art zu schaffen, die eine zuverlässigere Abdichtung zweier koaxialer Antriebswellen gewährleistet, von denen eine Antriebswelle teilweise in der anderen Antriebswelle aufgenommen ist, und die gleichzeitig eine einfache Möglichkeit zur Entlüftung sowie Leckageerkennung bietet.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass bei der Abdichtung von koaxial zueinander angeordneten Antriebswellen in einem Doppelkupplungsgetriebe mit getrennten Ölräumen für Doppelkupplung und Getriebe, ein Einfluss von Fliehkräften durch die rotierenden Antriebswellen auf die Abdichtung durch eine gehäusefeste Anordnung von Dichtmitteln, die an den Antriebswellen anliegen, vermieden werden kann, und dass diese gehäusefeste Anordnung der Dichtmittel mit einem in das Getriebegehäuse integrierten gehäusefesten Bauteil konstruktiv vorteilhaft umsetzbar ist.

Demnach geht die Erfindung aus von einer Dichtungsvorrichtung für ein Doppelkupplungsgetriebe eines Kraftfahrzeuges, mit einem Getriebegehäuse, in dem ein mit einem Kupplungsöl gefüllter Kupplungsraum zur Aufnahme einer Doppelkupplung und ein mit einem Getriebeöl gefüllter Getrieberaum zur Aufnahme eines Doppelkupplungsgetriebe-Radsatzes angeordnet sind, mit zwei koaxial gelagerten Antriebswellen, wobei die eine Antriebswelle als eine radial innere Zentralwelle ausgebildet ist, die innerhalb des Getrieberaumes aus der als eine äußere Hohlwelle ausgebildeten zweiten Antriebswelle stirnseitig austritt, und bei der die beiden Antriebswellen zur Abdichtung des Kupplungsraumes gegenüber dem Getrieberaum mit Hilfe wenigstens eines Dichtmittels abgedichtet sind.

Zur Lösung der gestellten Aufgabe sieht die Erfindung zudem vor, dass in dem Getriebegehäuse ein gehäusefestes Aufriahmebauteil angeordnet ist, an dem zwei benachbarte Dichtmittel aufgenommen sind, wobei das eine Dichtmittel radial auf der Hohlwelle abdichtet und das andere Dichtmittel radial auf der Zentralwelle abdichtet.

Durch die Aufnahme der Dichtmittel in einem gehäusefesten Aufnahmebauteil, im Folgenden auch kurz Aufnahme genannt, wird ein sicheres und robustes Dichtungskonzept im Doppelkupplungsgetriebe-Radsatz für getrennte Ölräume von Doppelkupplung und Getrieberadsatz zur Verfügung gestellt, bei dem an dem Dichtmittel keine fliehkraftbedingten Drehzahlbelastungen auftreten. Dies wird mit zwei an der Aufnahme befestigten Dichtmitteln erreicht, wobei je ein Dichtmittel auf einer der beiden Antriebswellen abdichtet. Zudem sind keine konstruktiven Änderungen an den herkömmlichen Antriebswellen erforderlich, welches sich kostengünstig auswirkt.

Die beiden Dichtmittel sind als Doppeldichtringe ausgebildet sind, die jeweils aus zwei Radialwellendichtringen bestehen. Radialwellendichtringe haben sich zur Abdichtung von Wellen bereits bewährt und stehen in verschiedenen Ausführungen relativ kostengünstig zur Verfügung. Besonders vorteilhaft ist es, Doppeldichtringe zu verwenden, die jeweils aus zwei beabstandeten Radialwellendichtringen bestehen. Dadurch entsteht innerhalb des Abstandes jeweils ein ölfreier Raum, der über die Aufnahme für eine Entlüftungs- bzw. Belüftungseinrichtung nach außerhalb des Getriebes nutzbar ist. Insbesondere kann diese Entlüftungseinrichtung über das Aufnahmebauteil konstruktiv einfacher und damit kostengünstiger realisiert werden, als im Vergleich zu aufwendigeren Entlüftungseinrichtungen über das Innere der zentralen Antriebswelle gemäß dem Stand der Technik. Vorteilhafterweise kann die Entlüftungseinrichtung gleichzeitig als eine Leckageerkennung für austretendes Getriebeöl und/oder Kupplungsöl im Falle einer Undichtigkeit der Dichtungsvorrichtung fungieren.

Zwischen den Doppeldichtringen ist ein mit dem Kupplungsraum verbundener Zwischenbereich ausgebildet , über den die radial innen liegenden Radialwellendichtringe zur Schmierung mit Kupplungsöl versorgbar sind, und dass außerhalb der Doppeldichtringe ein mit dem Getrieberaum verbundener Außenbereich ausgebildet ist, über den die radial außen liegenden Radialwellendichtringe zur Schmierung mit Getriebeöl versorgbar sind. Durch den Zwischenbereich und den Außenbereich wird eine zuverlässige Schmierung der Dichtringe auf den Wellen sichergestellt. Diese Schmierung ist zudem noch effektiver als eine Schmierung eines Doppeldichtringes, der in einem Radialspalt innerhalb der äußeren Hohlwelle sitzt.

Vorteilhafterweise kann zudem in dem Zwischenbereich zwischen den Doppeldichtringen ein Ölrücklauf zur Rückführung des Kupplungsöls in ein der Doppelkupplung zugeordnetes Ölreservoir vorgesehen sein. Dieser Ölrücklauf kann zudem ein Bestandteil eines inneren Beölungskonzeptes für eine Kupplungsbeölung sein.

Mit Vorteil ist das Aufnahmebauteil in einem in radialer Richtung zumindest zum Teil freien Bereich des Getrieberaumes angeordnet, wobei ein in radialer Richtung gedrungener Aufbau des Aufnahmebauteils günstig ist. Beispielsweise ist axial zu dem Austrittsbereich der Zentralwelle aus der Hohlwelle in der gleichen Querschnittsebene des Getriebes eine Synchronisierungsvorrichtung zur Drehzahlsynchronisation einer parallel zu den Abtriebswellen angeordneten Hauptwelle des Getriebes mit dem jeweiligen zu schaltenden Gangrad vorgesehen, mit einem radialen Freigang der entsprechenden Synchronschiebemuffe. Dafür wird nur ein Teil des Bauraums in radialer Richtung benötigt. Das Aufnahmebauteil kann konstruktiv unter Ausnutzung des freien radialen Bauraumes an dieser Stelle in das Getriebegehäuse integriert sein, so dass kein zusätzlicher axialer Bauraum für das Aufnahmebauteil beziehungsweise die Dichtungsvorrichtung benötigt wird.

Außerdem kann vorgesehen sein, dass das Aufnahmebauteil zu der Funktion der Aufnahme der Dichtmittel für wenigstens eine zusätzliche Funktion ausgebildet ist. An dem Aufnahmebauteil können so vorteilhafterweise auch Mittel zur Aufnahme einer Zwischenradlagerung für einen Rückwärtsgang ausgebildet sein. Dabei können Lagerkräfte, die an der Zwischenradlagerung auftreten, wenigstens über einen Teil des Getriebegehäuses abgeleitet werden, wodurch eine günstigere Lastverteilung im Getriebe erreicht wird.

Es können auch Mittel zur Lagerung wenigstens einer Schaltstange an dem Aufnahmebauteil ausgebildet sein. Zudem können Mittel zur Lagerung wenigstens einer Rastierung und/oder Verriegelung der wenigstens einen Schaltstange am Aufnahmebauteil ausgebildet sein. Schließlich können an dem Aufnahmebauteil auch noch Mittel zur Befestigung einer Sensor-Einrichtung, insbesondere für Sensoren zur Schaltwegerkennung und zur Drehzahlerfassung ausgebildet sein.

Durch die beschriebene hohe Funktionsintegration des Aufnahmebauteils wird eine zuverlässige und robuste Abdichtung der koaxialen Antriebswellen geschaffen, die gleichzeitig den zur Verfügung stehenden Getriebebauraum besonders effektiv ausnutzt. Dadurch ist ein besonders kompakt bauendes Doppelkupplungsgetriebe realisierbar. Der erforderliche Getriebebauraum kann sogar gegenüber konventionellen Konstruktionen verringert werden.

Zur Verdeutlichung der Erfindung ist der Beschreibung eine Zeichnung eines Ausführungsbeispiels beigefügt. In dieser zeigt:
- Fig. 1: eine Übersichtdarstellung eines Doppelkupplungsgetriebes mit einer erfindungsgemäßen Dichtungsvorrichtung,
- Fig. 2: eine Seitenansicht im Schnitt des Getriebes mit einem integrierten Aufnahmebauteil,
- Fig. 3: ein Ausschnitt aus Fig. 2 zur Darstellung einer Gehäuseanbindung des Aufnahmebauteils,
- Fig. 4: eine perspektivische Ansicht auf die Dichtungsvorrichtung im Ausschnitt mit zwei Doppeldichtringen,
- Fig. 5: eine Detailansicht des Getriebes zur Aufnahme eines Rückwärtsgang-Zwischenrades in dem Aufnahmebauteil,
- Fig. 6a: eine perspektivische Draufsicht auf das Getriebe im Detail zur Lagerung von Schaltstangen,
- Fig. 6b: die Fig. 6a in einer Seitenansicht im Schnitt,
- Fig. 7a: eine perspektivische Draufsicht auf das Getriebe im Detail zur Aufnahme einer Sensoreinrichtung in dem Aufnahmebauteil,
- Fig. 7b: eine perspektivische Draufsicht auf das Getriebe im Detail zur Aufnahme von Drehzahlsensoren für Antriebswellen und
- Fig. 8: ein perspektivischer Schnitt durch das Aufnahmebauteil zur Darstellung eines Schmierölkreislaufs.

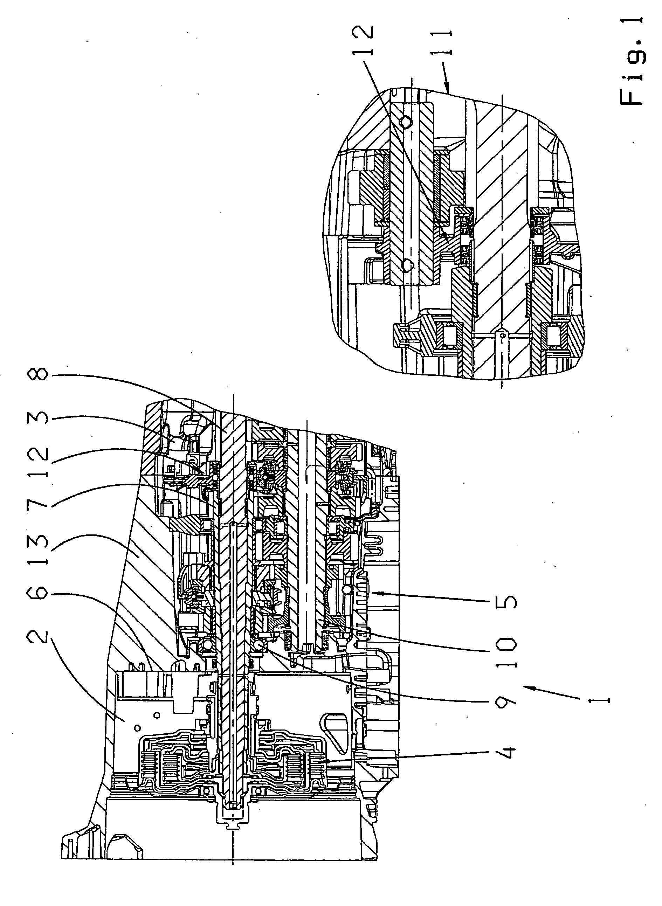

Demnach ist in Fig. 1 ein Doppelkupplungsgetriebe 1 eines Kraftfahrzeuges mit getrennten Ölräumen 2, 3 dargestellt. Der Ölraum 2 ist als ein Kupplungsraum zur Aufnahme einer nassen Lammellen-Doppelkupplung 4 ausgebildet. Der Ölraum 3 ist als ein Getrieberaum ausgebildet, der einen Doppelkupplungsgetriebe-Radsatz 5 im Sinne von zwei Teilgetrieben aufnimmt. Die Ölräume 2 und 3 sind von einem gemeinsamen Getriebegehäuse 13 umgeben. Die Funktionsweise eines Doppelkupplungsgetriebes ist an sich bekannt. Daher wird im Folgenden nur auf die erfindungsgemäße Dichtungsvorrichtung im Detail eingegangen.

Die Ölräume 2, 3 sind durch eine Trennwand 6 getrennt, durch die zwei Antriebswellen geführt sind. Die erste Antriebswelle ist als eine Hohlwelle 7 ausgebildet, in der die zweite Antriebswelle als eine Zentralwelle 8 koaxial geführt ist. Jede der beiden Wellen 7 und 8 ist drehbar gelagert und mit einer Einzelkupplung der Doppelkupplung 4 im Kupplungsraum 2 sowie mit einem Radsatz für eine Ganggruppe im Getrieberaum 3 verbunden. Diese (nicht näher erläuterten) Radsätze wirken mit einem entsprechenden (ebenfalls nicht näher erläuterten) Radsatz einer Getriebe-Hauptwelle 10 sowie einer Ritzelwelle 14 wechselweise in an sich bekannter Weise zusammen. Die Hohlwelle 7 ist im Bereich der Trennwand 6 drehbar gelagert und mittels einer Dichtung 9, beispielsweise eines Radialwellendichtrings abgedichtet. Innerhalb des Getrieberaumes 3 tritt die Zentralwelle 8 aus der Hohlwelle 7 aus. Der Austrittsbereich 11 ist in einem Ausriss in der unteren Bildhälfte von Fig. 1 vergrößert dargestellt. In diesem Bereich ist ein Aufnahmebauteil 12 angeordnet, dass sich in radialer Ausrichtung in dem Getriebegehäuse 13 erstreckt. Gemäß Fig. 1 befindet sich das Aufnahmebauteil 12 in einer Querschnittsebene im Getriebegehäuse, in der an der Getriebeabtriebswelle bzw. Hauptwelle 10 auch eine Synchronisationsvorrichtung des Getriebes angeordnet ist.

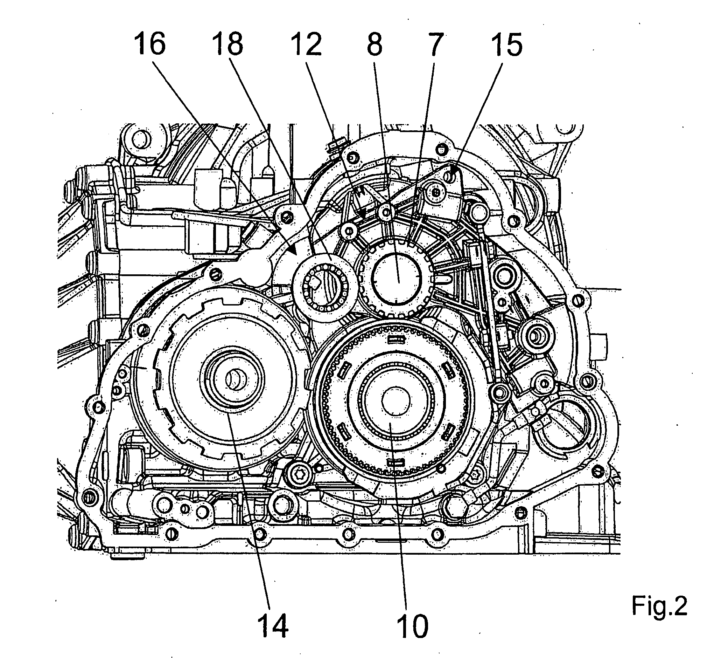

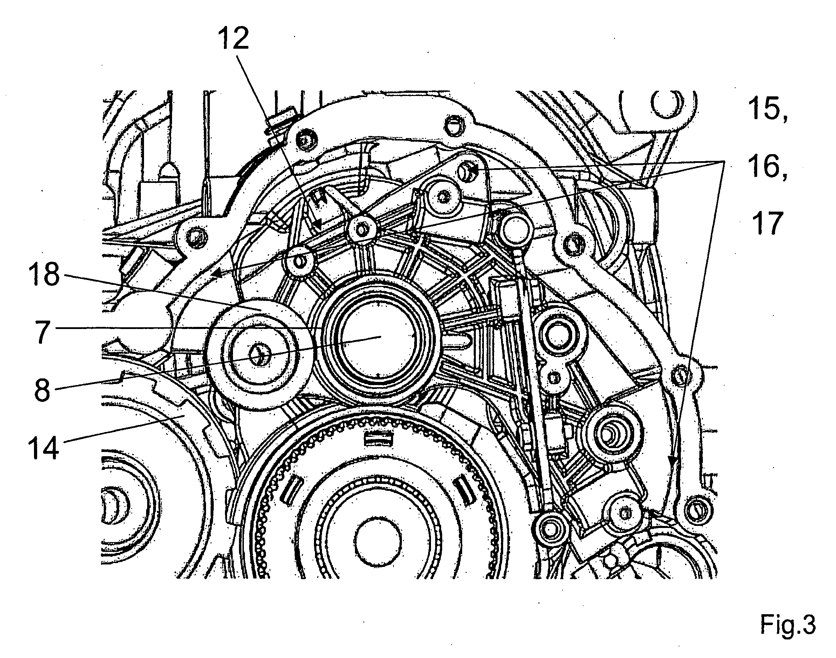

Das Aufnahmebauteil 12 ist als eine gehäusefeste Streben- und Lagerkonstruktion mit einer hohen Funktionsintegration ausgebildet, die in einer Seitenansicht in größerem Maßstab des Doppelkupplungsgetriebes 1 in Fig. 2 angedeutet ist. Das Aufnahmebauteil 12 baut im Wesentlichen oberhalb der Hauptwelle 10 und der Ritzewelle 14 um die beiden Antriebswellen 7, 8 herum. Fig. 3 zeigt einen vergrößerten Ausschnitt von Fig. 2, der die Anbindung des Aufnahmebauteils 12 an dem Getriebegehäuse 13 verdeutlicht. An drei Anbindungsstellen 15, 16, 17 sind dazu entsprechende Passstücke an dem Getriebegehäuse 13 und dem Aufnahmebauteil 12 befestigt, die das Aufnahmebauteil 12 gehäusefest fixieren. Weiterhin ist ein Rückwärtsgang-Zwischenrad 18 an dem Aufnahmebauteil 12 gelagert.

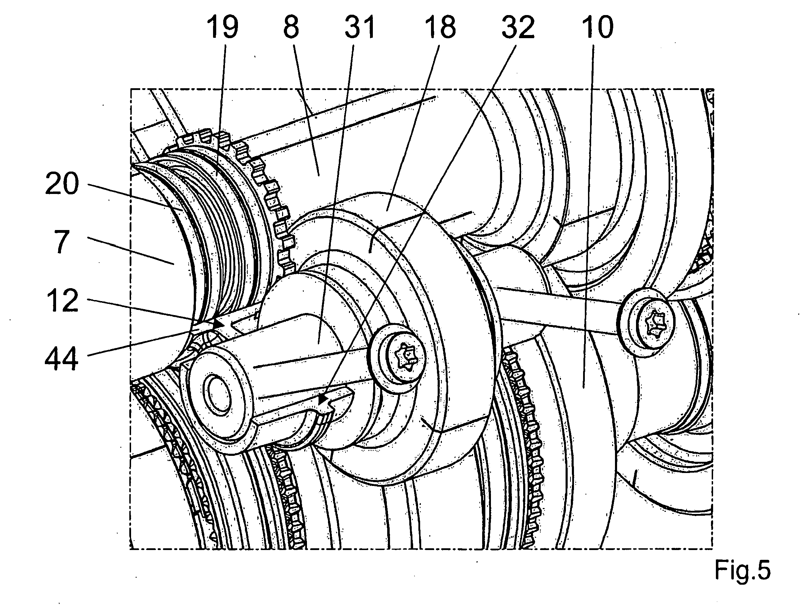

Die Anbindungsstellen 15, 16, 17 sind gleichzeitig zur Lastverteilung von Lagerkräften über das Getriebegehäuse 13, die insbesondere von dem an dem Aufnahmebauteil 12 gelagerten Rückwärtsgang-Zwischenrad 18 ausgehen, wirksam. Die Lagerung des Rückwärtsgang-Zwischenrades 18 an dem Aufnahmebauteil 12 ist zur Verdeutlichung auch in einer perspektivischen Darstellung in der Fig. 5 gezeigt. Das Rückwärtsgang-Zwischenrad 18 weist eine Steckachse 31 auf, die in einer entsprechenden Passbohrung 32 des Aufnahmebauteils 12 gelagert ist.

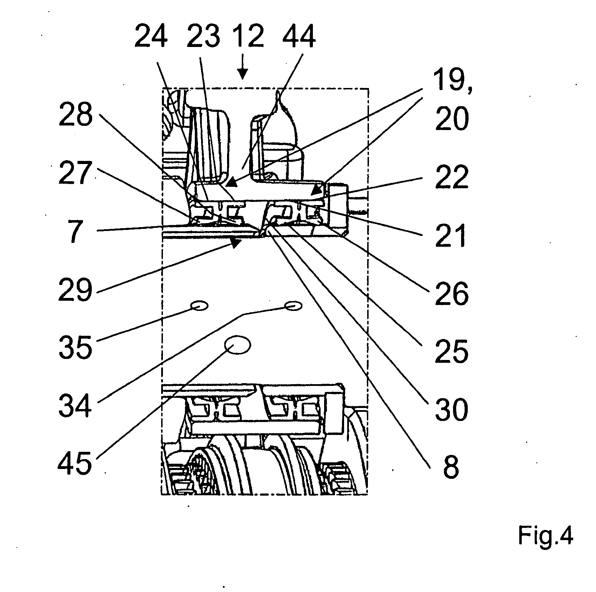

Die Fig. 4 zeigt ein Ansatzstück 44 des Aufnahmebauteils 12, an dem zwei Dichtmittel 19, 20 zur Abdichtung der koaxialen Antriebswellen 7 und 8 aufgenommen, vorteilhaft eingepresst, sind. Die Dichtmittel 19, 20 sind als doppelseitig wirkende Dichtringe, kurz Doppeldichtringe ausgebildet. Jeder Doppeldichtring 19, 20 weist zwei miteinander verbundene Radialwellendichtringe 21, 22 bzw. 23, 24 auf, die über radial innere Dichtlippen 25, 26 bzw. 27, 28 an der Zentralwelle 8 bzw. an der Hohlwelle 7 anliegen. Dadurch wird derjenige Bereich außerhalb der Doppeldichtringe 19 und 20, der mit dem Getrieberaum 3 verbunden ist, gegen einen Zwischenbereich 29, der zwischen den Doppeldichtringen 19 und 20 ausgebildet und über einen Radialspalt 30 zwischen der Hohlwelle 7 und der Zentralwelle 8 mit dem Kupplungsraum 2 verbunden ist, abgedichtet. Der Zwischenbereich 29 wird mit Kupplungsöl versorgt, welches die radial innen liegenden Dichtlippen 25, 27 der Radialwellendichtringe 21, 23 schmiert.

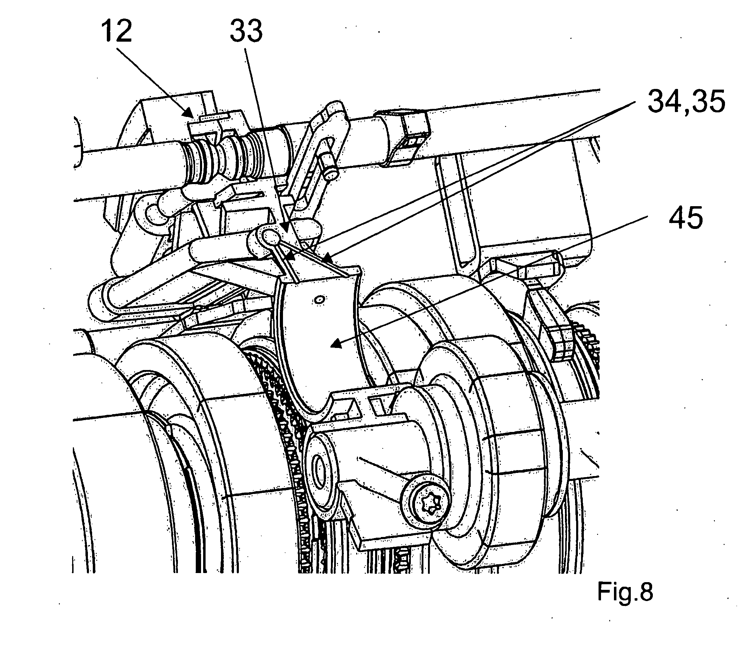

In dem Zwischenbereich 29 ist ein Ölrücklauf 45 zur Rückführung des Kupplungsöls in einem Schmierölkreislauf über das Aufnahmebauteil 12 vorgesehen. Dies ist in der perspektivischen Schnittdarstellung in Fig. 8 verdeutlicht. Radial außerhalb der Doppeldichtringe 19, 20 werden die äußeren Radialwellendichtringe 22 und 24 mit Getriebeöl geschmiert. Die Fig. 8 zeigt weiterhin eine Entlüftungseinrichtung 33 mit zwei Entlüftungskanälen 34, 35. Die Entlüftungskanäle 34 bzw. 35 sind zwischen den Radialwellendichtringen 21 und 22 des ersten Doppeldichtringes 19 bzw. zwischen den Radialwellendichtringen 23 und 24 des zweiten Doppeldichtringes 20 angeordnet. Die Entlüftungskanäle 34 und 35 führen über ein Teil des Aufnahmebauteils 12 nach außerhalb des Getrieberaumes 3. Die Entlüftungseinrichtung 33 fungiert gleichzeitig als eine Leckagekontrolle.

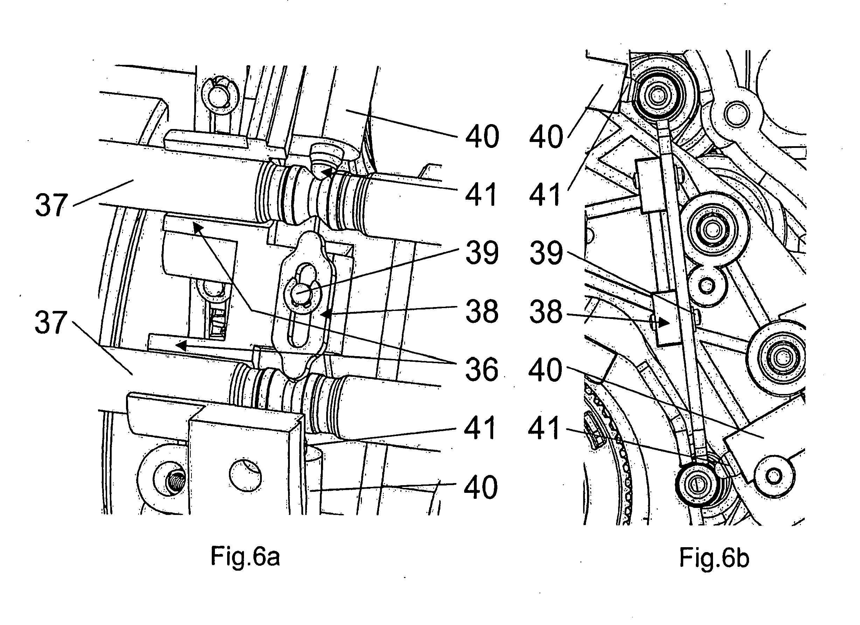

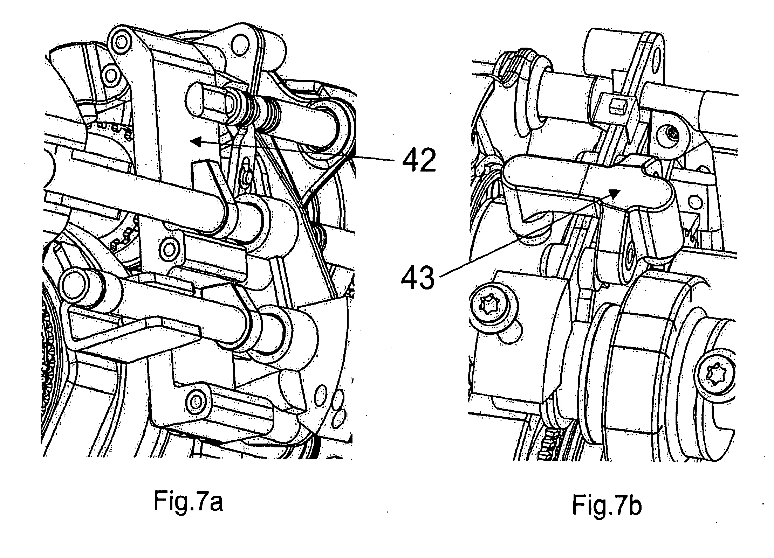

Die Fig. 6 und 7 veranschaulichen zwei weitere Funktionen des Aufnahmebauteils 12. Die Fig. 6a zeigt in einer Draufsicht zwei Lagerungen 36 zur Aufnahme von zwei Schaltstangen 37 sowie eine Aufnahme 38 für eine Verriegelung 39 der Schaltstangen 37 und zwei Aufnahmen 40 für zwei Rastierungen 41 der Schaltstangen 37. Fig. 6b. zeigt diese Aufnahmebauteile in einer Seitenansicht.

Die Fig. 7a und Fig.7b zeigen in zwei perspektivischen Draufsichten schließlich noch eine in das Aufnahmebauteil 12 integrierte Sensoraufnahme zur Aufnahme von Sensorelementen, insbesondere einen Sensorturm 42 zur Betätigungskontrolle bzw. Steuerung von Schaltstangen des Doppelkupplungsgetriebes, sowie zur Aufnahme von Drehzahlsensoren 43 zur Erfassung der Drehzahl von Antriebswellen desselben.

### Bezugszeichen

- 1: Doppelkupplungsgetriebe
- 2: Kupplungsraum
- 3: Getrieberaum
- 4: Doppelkupplung
- 5: Doppelkupplungsgetriebe-Radsatz
- 6: Trennwand
- 7: Antriebswelle, Hohlwelle
- 8: Antriebswelle, Zentralwelle
- 9: Dichtung
- 10: Hauptwelle
- 11: Austrittsbereich
- 12: Aufnahmebauteil
- 13: Getriebegehäuse
- 14: Ritzelwelle
- 15: Anbindungsstelle
- 16: Anbindungsstelle
- 17: Anbindungsstelle
- 18: Rückwärtsgang-Zwischenrad
- 19: Doppeldichtring
- 20: Doppeldichtring
- 21: Radialwellendichtring
- 22: Radialwellendichtring
- 23: Radialwellendichtring
- 24: Radialwellendichtring
- 25: Dichtlippe
- 26: Dichtlippe
- 27: Dichtlippe
- 28: Dichtlippe
- 29: Zwischenbereich
- 30: Radialspalt
- 31: Steckachse
- 32: Passbohrung
- 33: Entlüftungseinrichtung/Leckagekontrolle
- 34: Entlüftungskanal
- 35: Entlüftungskanal
- 36: Lagerung
- 37: Schaltstange
- 38: Verriegelungs-Aufnahme
- 39: Verriegelung
- 40: Rastierungs-Aufnahme
- 41: Rastierung
- 42: Sensorturm
- 43: Drehzahlsensor
- 44: Ansatzstück
- 45: Ölrücklauf

## Patentansprüche

1. Doppelkupplungsgetriebe (1) eines Kraftfahrzeuges, mit einem Getriebegehäuse (13), in dem ein mit einem Kupplungsöl gefüllter Kupplungsraum (2) zur Aufnahme einer Doppelkupplung (4) und ein mit einem Getriebeöl gefüllter Getrieberaum (3) zur Aufnahme eines Doppelkupplungsgetriebe-Radsatzes (5) angeordnet sind, mit zwei koaxial ineinander gelagerten Antriebswellen (7; 8), wobei die eine Antriebswelle (8) als eine innere Zentralwelle ausgebildet ist, die innerhalb des Getrieberaumes (3) aus der als eine äußere Hohlwelle ausgebildeten zweiten Antriebswelle (7) stirnseitig austritt, und bei der die beiden Antriebswellen (7, 8) zur Abdichtung des Kupplungsraumes (2) gegenüber dem Getrieberaum (3) mit Hilfe wenigstens einer Dichtmittels abgedichtet sind, wobei in dem Getriebegehäuse (13) ein gehäusefestes Aufnahmebauteil (12) angeordnet ist, an dem zwei benachbarte Dichtmittel (19, 20) aufgenommen sind, wobei das eine Dichtmittel (20) radial auf der hohlen Antriebswelle (7) und das andere Dichtmittel (19) radial auf der zentralen Antriebswelle (8) abdichtet, **dadurch gekennzeichnet, dass** die beiden Dichtmittel (19, 20) als Doppeldichtringe ausgebildet sind, die jeweils aus zwei Radialwellendichtringen (21, 22, 23, 24) bestehen und dass zwischen den Doppeldichtringen (19, 20) ein mit dem Kupplungsraum (2) verbundener Zwischenbereich (29) ausgebildet ist. über den die innen liegenden Radialwellendichtringe (21, 23) zur Schmierung mit Kupplungsöl versorgbar sind, und dass außerhalb der Doppeldichtringe (19,20) ein mit dem Getrieberaum (3) verbundener Außenbereich ausgebildet ist, über den die außen liegenden Radialwellendichtringe (22, 24) zur Schmierung mit Getriebeöl versorgbar sind.

2. Doppelkupplungsgetriebe nach Anspruch 1, **dadurch gekennzeichnet, dass** in dem Zwischenbereich (29) zwischen den Doppeldichtringen (19, 20) ein Ölrücklauf (45) zur Rückführung des Kupplungsöls in ein der Doppelkupplung (4) zugeordnetes Ölreservoir vorgesehen ist

3. Doppelkupplungsgetriebe nach Anspruch 1 oder 2, **dadurch gekennzeichnet, dass** jeweils zwischen dem axial äußeren Radialwellendichtring (22, 24) und dem axial inneren Radialwellendichtring (21, 23) eine über das Aufnahmebauteil (12) nach außerhalb des Getrieberaumes (3) führende Entlüftungseinrichtung (33) angeordnet ist.

4. Doppelkupplungsgetriebe nach Anspruch 3, **dadurch gekennzeichnet, dass** die Entlüftungseinrichtung (33) als eine Leckageerkennung wirksam ist.

5. Doppelkupplungsgetriebe nach einem der Ansprüche 1 bis 4, **dadurch gekennzeichnet, dass** das Aufnahmebauteil (12) in einem in radialer Richtung zumindest zum Teil freien Bereich des Getrieberaumes (3) angeordnet ist.

6. Doppelkupplungsgetriebe nach Anspruch 5, **dadurch gekennzeichnet, dass** das Aufnahmebauteil (12) in einer Querschnittsebene im Getriebegehäuse (13) angeordnet ist, in der auch eine Synchronisationsvorrichtung an der Hauptwelle (10) des Doppelkupplungsgetriebes (1) ausgebildet ist.

7. Doppelkupplungsgetriebe nach einem der Ansprüche 1 bis 6, **dadurch gekennzeichnet, dass** das Aufnahmebauteil (12) zu der Funktion der Aufnahme der Dichtmittel (19, 20) für wenigstens eine zusätzliche Funktion vorgesehen ist.

8. Doppelkupplungsgetriebe nach Anspruch 7, **dadurch gekennzeichnet, dass** an dem Aufnahmebauteil (12) Mittel zur Aufnahme einer Zwischenradlagerung für ein Rückwärtsgang-Zwischenrad (18) ausgebildet sind.

9. Doppelkupplungsgetriebe nach Anspruch 8, **dadurch gekennzeichnet, dass** mit Hilfe des Aufnahmebauteils (12) Lagerkräfte, die an der Zwischenradlagerung auftreten, wenigstens über einen Teil des Getriebegehäuses (13) ableitbar sind.

10. Doppelkupplungsgetriebe nach einem der Ansprüche 7 bis 9, **dadurch gekennzeichnet, dass** an dem Aufnahmebauteil (12) Mittel zur Lagerung wenigstens einer Schaltstange (37) ausgebildet sind.

11. Doppelkupplungsgetriebe nach Anspruch 10, **dadurch gekennzeichnet, dass** an dem Aufnahmebauteil (12) Mittel zur Lagerung wenigstens einer Rastierung (41) der wenigstens einen Schaltstange (37) ausgebildet sind.

12. Doppelkupplungsgetriebe nach Anspruch 9 oder 10, **dadurch gekennzeichnet, dass** an dem Aufnahmebauteil (12) Mittel zur Lagerung wenigstens einer Verriegelung (39) der wenigstens einen Schaltstange (37) ausgebildet sind.

13. Doppelkupplungsgetriebe nach einem der Ansprüche 6 bis 11, **dadurch gekennzeichnet , dass** an dem Aufnahmeteil (12) Mittel zur Befestigung von Sensorelementen (42, 43) ausgebildet sind.

## Claims

1. Dual-clutch transmission (1) of a motor vehicle, having a transmission housing (13) in which are arranged a clutch-oil-filled clutch chamber (2) for holding a dual clutch (4) and a transmission-oil-filled transmission chamber (3) for holding a dual-clutch transmission gear set (5), having two drive input shafts (7, 8) which are mounted coaxially one inside the other, with the one drive input shaft (8) being designed as an inner, central shaft which, within the transmission chamber (3), emerges at the end side out of the second drive input shaft (7) which is designed as an outer, hollow shaft, and in which, in order to seal off the clutch chamber (2), the two drive input shafts (7, 8) are sealed off with respect to the transmission chamber (3) by at least one sealing means, with a holding component (12) which is fixed with respect to the housing being arranged in the transmission housing (13), on which holding component (12) are held two adjacent sealing means (19, 20), with the one sealing means (20) being sealed off radially on the hollow drive input shaft (7) and the other sealing means (19) being sealed off radially on the central drive input shaft (8), **characterized in that** the two sealing means (19, 20) are designed as double sealing rings which are each composed of two radial shaft sealing rings (21, 22, 23, 24), and **in that** an intermediate region (29), which is connected to the clutch chamber (2), is formed between the double sealing rings (19, 20), via which intermediate region (29) the inner radial shaft sealing rings (21, 23) can be supplied with clutch oil for lubrication, and **in that** an outer region, which is connected to the transmission chamber (3), is formed outside the double sealing rings (19, 20), via which outer region the outer radial shaft sealing rings (22, 24) can be supplied with transmission oil for lubrication.

2. Dual-clutch transmission according to Claim 1, **characterized in that** an oil return line (45) for returning the clutch oil into an oil reservoir, which is assigned to the dual clutch (4), is provided in the intermediate region (29) between the double sealing rings (19, 20).

3. Dual-clutch transmission according to Claim 1 or 2, **characterized in that** a ventilation device (33) which leads to the outside of the transmission chamber (3) via the holding component (12) is arranged in each case between the axially outer radial shaft sealing ring (22, 24) and the axially inner radial shaft sealing ring (21, 23).

4. Dual-clutch transmission according to Claim 3, **characterized in that** the ventilation device (33) acts as a leak detection arrangement.

5. Dual-clutch transmission according to one of Claims 1 to 4, **characterized in that** the holding component (12) is arranged in a region, which is at least partially free in the radial direction, of the transmission chamber (3).

6. Dual-clutch transmission according to Claim 5, **characterized in that** the holding component (12) is arranged in the transmission housing (13) in a cross-sectional plane in which a synchronization device on the main shaft (10) of the dual-clutch transmission (1) is also formed.

7. Dual-clutch transmission according to one of Claims 1 to 6, **characterized in that** the holding component (12) is provided for at least one function in addition to the function of holding the sealing means (19, 20).

8. Dual-clutch transmission according to Claim 7, **characterized in that** means for holding an intermediate wheel bearing arrangement for a reverse gear intermediate wheel (18) are formed on the holding component (12).

9. Dual-clutch transmission according to Claim 8, **characterized in that**, by means of the holding component (12), bearing forces which occur at the intermediate wheel bearing arrangement can be dissipated at least via a part of the transmission housing (13).

10. Dual-clutch transmission according to one of Claims 7 to 9, **characterized in that** means for mounting at least one shift rod (37) are formed on the holding component (12).

11. Dual-clutch transmission according to Claim 10, **characterized in that** means for mounting at least one latching arrangement (41) of the at least one shift rod (37) are formed on the holding component (12).

12. Dual-clutch transmission according to Claim 9 or 10, **characterized in that** means for mounting at least one locking arrangement (39) of the at least one shift rod (37) are formed on the holding component (12).

13. Dual-clutch transmission according to one of Claims 6 to 11, **characterized in that** means for fastening sensor elements (42, 43) are formed on the holding part (12).

## Revendications

1. Transmission à double embrayage (1) d'un véhicule automobile, comprenant une boîte de transmission (13), dans laquelle sont disposés un espace d'embrayage (2) rempli d'une huile d'embrayage pour recevoir un double embrayage (4) et un espace de transmission (3) rempli d'une huile de transmission pour recevoir un jeu de roues (5) de la transmission à double embrayage, avec deux arbres d'entraînement (7, 8) montés coaxialement l'un dans l'autre, l'un des arbres d'entraînement (8) étant réalisé sous forme d'arbre central interne, qui sort du côté frontal à l'intérieur de l'espace de transmission (3) hors du deuxième arbre d'entraînement (7) réalisé sous forme d'arbre creux extérieur, et dans laquelle les deux arbres d'entraînement (7, 8) sont rendus étanches vis-à-vis de l'espace de transmission (3) au moyen d'au moins un moyen d'étanchéité pour réaliser l'étanchéité de l'espace d'embrayage (2), un composant de réception (12) fixé à la boîte étant disposé dans la boîte de transmission (13), et recevant deux moyens d'étanchéité adjacents (19, 20), l'un des moyens d'étanchéité (20) réalisant l'étanchéité radialement sur l'arbre d'entraînement creux (7) et l'autre moyen d'étanchéité (19) réalisant l'étanchéité radialement sur l'arbre d'entraînement central (8), **caractérisée en ce que** les deux moyens d'étanchéité (19, 20) sont réalisés sous forme de doubles bagues d'étanchéité qui se composent chacune de deux bagues d'étanchéité radiales pour arbres (21, 22, 23, 24) et **en ce qu'**entre les doubles bagues d'étanchéité (19, 20) est réalisée une région intermédiaire (29) connectée à l'espace d'embrayage (2), par le biais de laquelle les bagues d'étanchéité radiales pour arbres (21, 23) situées à l'intérieur peuvent être alimentées en huile d'embrayage pour la lubrification, et **en ce qu'**en dehors des doubles bagues d'étanchéité (19, 20) est réalisée une région extérieure connectée à l'espace de transmission (3), par le biais de laquelle les bagues d'étanchéité radiales pour arbres (22, 24) situées à l'extérieur peuvent être alimentées en huile de transmission pour la lubrification.

2. Transmission à double embrayage selon la revendication 1, **caractérisée en ce que** dans la région intermédiaire (29) entre les doubles bagues d'étanchéité (19, 20) est prévu un retour d'huile (45) pour ramener l'huile d'embrayage dans un réservoir d'huile associé au double embrayage (4).

3. Transmission à double embrayage selon la revendication 1 ou 2, **caractérisée en ce qu'**à chaque fois entre la bague d'étanchéité radiale pour arbres (22, 24) située axialement à l'extérieur et la bague d'étanchéité radiale pour arbres (21, 23) située axialement à l'intérieur est disposé un dispositif de désaérage (33) conduisant par le biais du composant de réception (12) vers l'extérieur de l'espace de transmission (3).

4. Transmission à double embrayage selon la revendication 3, **caractérisée en ce que** le dispositif de désaérage (33) agit en tant que détecteur de fuite.

5. Transmission à double embrayage selon l'une quelconque des revendications 1 à 4, **caractérisée en ce que** le composant de réception (12) est disposé dans une région de l'espace de transmission (3) au moins partiellement libre dans la direction radiale.

6. Transmission à double embrayage selon la revendication 5, **caractérisée en ce que** le composant de réception (12) est disposé dans un plan en section transversale dans la boîte de transmission (13) dans lequel est également réalisé un dispositif de synchronisation sur l'arbre principal (10) de la transmission à double embrayage (1).

7. Transmission à double embrayage selon l'une quelconque des revendications 1 à 6, **caractérisée en ce que** le composant de réception (12) est prévu pour assurer une fonction supplémentaire en plus de la fonction de recevoir le moyen d'étanchéité (19, 20).

8. Transmission à double embrayage selon la revendication 7, **caractérisée en ce que** sur le composant de réception (12) sont réalisés des moyens pour recevoir un support de palier de roue intermédiaire pour une roue intermédiaire (18) de marche arrière.

9. Transmission à double embrayage selon la revendication 8, **caractérisée en ce qu'**à l'aide du composant de réception (12), des forces de palier qui se produisent sur le support de palier de roue intermédiaire, peuvent être évacuées au moins sur une partie de la boîte de transmission (13).

10. Transmission à double embrayage selon l'une quelconque des revendications 7 à 9, **caractérisée en ce que** des moyens de support d'au moins une tringle de changement de vitesse (37) sont réalisés sur le composant de réception (12).

11. Transmission à double embrayage selon la revendication 10, **caractérisée en ce que** des moyens pour le support d'au moins un encliquetage (41) de l'au moins une tringle de changement de vitesse (37) sont réalisés sur le composant de réception (12).

12. Transmission à double embrayage selon la revendication 9 ou 10, **caractérisée en ce que** des moyens pour le support d'au moins un verrouillage (39) de l'au moins une tringle de changement de vitesse (37) sont réalisés sur le composant de réception (12).

13. Transmission à double embrayage selon l'une quelconque des revendications 6 à 11, **caractérisée en ce que** des moyens pour fixer des éléments de capteur (42, 43) sont réalisés sur le composant de réception (12).
